# EUROPEAN PATENT SPECIFICATION

(11) **EP 2 855 973 B1**
(45) Date of publication and mention of the grant of the patent: **04.05.2016**
(21) Application number: 13735403.1
(22) Date of filing: 03.06.2013
(51) Int. Cl.: F16G 13/16, H02G 11/00

(54) **ENERGY CHAIN SYSTEM**
ENERGIEKETTENSYSTEM
SYSTÈME DE CHAÎNE ÉNERGÉTIQUE

(30) Priority: 05.06.2012 IT MI20120972
(43) Date of publication of application: 08.04.2015
(73) Proprietor: Findalto S.r.l., 20052 Monza (MB) (IT)
(72) Inventor: MAURI, Giovanni, I-20052 Monza (IT)
(74) Representative: Riccardi, Sergio
(86) International application number: PCT/IB2013/001180
(87) International publication number: WO 2013/182889

(56) References cited:
- EP-A1- 2 026 437
- DE-A1-102007 013 083
- DE-U1-202008 005 165
- DE-U1-202012 003 908
- KR-B1- 100 854 053
- KR-B1- 101 108 209
- US-A1- 2005 040 275
- US-B1- 6 425 238

## Description

The present invention relates to an energy chain system comprising a cable chain and a chain guide channel. The system of the present invention is particularly useful for applications where the travel of the operative device, fed by cables arranged inside the chain, has a considerable extension.

It is well known that cable chains are used when it is necessary to feed energy to an operative device travelling along a predetermined stroke, for instance a working tool of a numerical control machine or a device to take parts from an automated store and the like. These operative devices frequently need to be fed from one or more sources, that may be hydraulic, electric, pneumatic or other nature. It is clear that the longer is the travel of the operative device, the longer are the feed cables, so that the weight of the cables and of the chain increases accordingly. These static loads are then added to the dynamic loads coming from the chain acceleration as it is driven by the operative device. Moreover, in case of longer strokes and to keep low the travelling time, accelerations and consequently the inertial loads are increasing in accordance with the stroke length. All these conditions cause a total load on the chain that may reach such an amount to jeopardize a smooth operation.

Many manufacturers of cable chain systems, in order to support the total weight of cables and chain, adopted chain configurations where a first portion proximal to the feeding sources, is lying on a plane and therefore is standstill, while a second portion proximal to the mobile operative device, is folded and slidable on the first portion. If on one hand such a configuration allows to support the chain, on the other hand it causes two further technical problems: wear caused by the chain mobile portion sliding on the underlying first portion and moreover a considerable drag due to the sliding friction between the two chain portions. More particularly in the return stroke, namely the movement of the operative device causing the chain mobile portion to lie on the support plane, the resistance of the chain against the movement of the operative device tends to separate the mobile portion from the stationary portion, according to an instability typical of the combined bending and compressive stress exerted by the operative device on the corresponding chain end. The consequence is that the regular chain operation is damaged by constant bounces of the mobile portion on the stationary portion, causing a greater noise, irregularity of the movement of the operative device and a greater risk of system failure.

Obviously in the course of time several attempts were made to find a solution of the problem to reduce noise, wear and resistance of the energy chain when the mobile portion of the chain slides on the underlying portion of the chain.

Document EP2026437 A1, regarded as being the prior art closest to the subject-matter of the present invention, discloses an energy chain system comprising an energy chain in which links being parallel and on opposite sides of the chain are connected by crossing members, and links being adjacent and on the same side of the chain are rotatably connected by pivot joints, the links being provided with runners having support surfaces, and a guide channel housing between sidewalls thereof, a chain portion lying on a plane of said channel, said sidewalls being further provided with rollers on which said support surfaces slide.

Other structures of energy chain systems are disclosed in documents KR 101 108 209 B1, DE 10 2007 013083 A1, US 6 425 238 B1 and DE 20 2012 003908 U1. However, none of the above mentioned documents show a combination of rollers on the guide channel and rollers applied to the links of the chain. Furthermore, there are no documents showing an energy chain having links with different runners that are positioned in an alternating manner.

These problems are solved by an energy chain system having the features recited in claim 1. The subject-matter of claim 1 differs from these known energy chain systems in that the runner of each link within the laid chain portion coinciding with said rollers has a recess and links adjacent to said link provided with said recess have, in turn, a runner provided with a roller and a runner provided with a protrusion, said runners with said rollers and said runners with said protrusion on overlapping chain portion being arranged to mutually cooperate. Other advantageous features of the present invention are recited in the dependent claims.

As it will become apparent from the following detailed description of the system of the present invention, the provision of support rollers allows to convert the sliding friction, due to the sliding movement of a chain portion on the other portion, into a rolling friction between the runners of each link and the rollers on the side walls of the guide channel. Consequently, all the problems of rapid wear of the contacting parts, excessive noise and irregular motion of the operative device in its travelling stroke, are removed.

For the sake of clarity, a detailed description of an alternative embodiment will be given hereinafter, wherein the mobile portion of the chain is supported also by providing rollers in the guide channel. However it is to be pointed out that the preferred embodiment recited in the independent claim 1, does not comprise support rollers in the guide channel, thus having a simpler configuration in respect of the detailed description; therefore the preferred configuration will be drawn thereafter as a simplification of the detailed description.

These and other characteristics and advantages of the energy chain system of the present invention will be easily understood by reading the following detailed description of alternative and preferred embodiments of the invention, to be taken in connection with the accompanying sheets of drawings, in which:
Fig. 1 is a perspective view of the energy chain according to a first embodiment of the present invention;

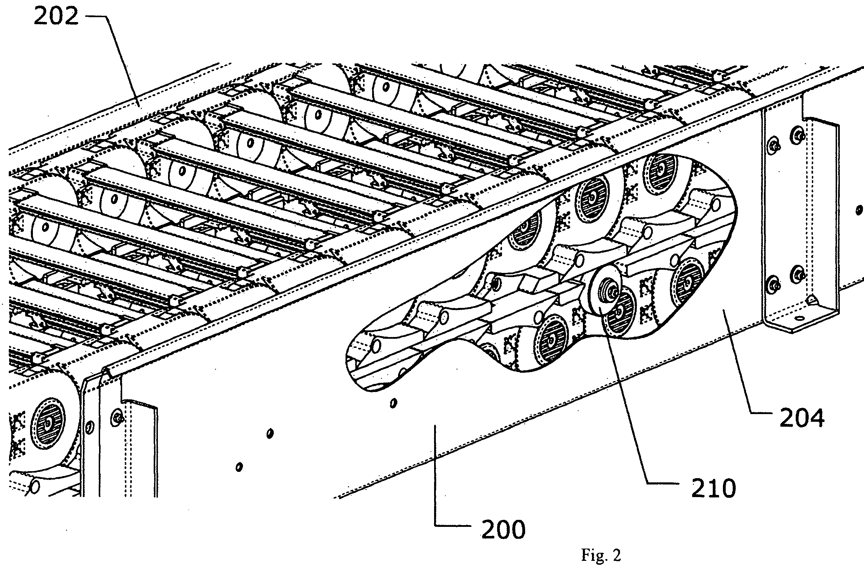

Fig. 2 is a perspective view of a detail of Fig. 1 with shown through parts;

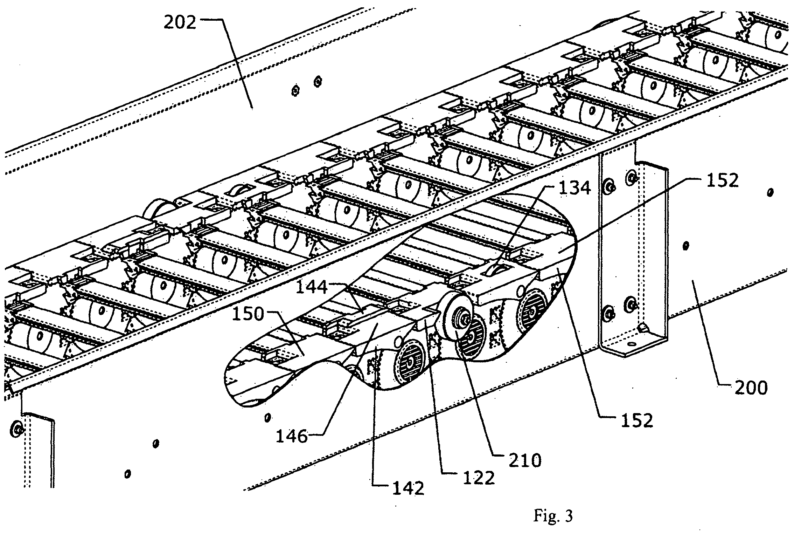

Fig. 3 is a perspective view of the detail of Fig. 2 with removed parts;
Fig. 4 is a side view of the detail shown in Fig. 2;
Fig. 5 is a side view of the detail shown in Fig. 2 in a second operative position of the chain;

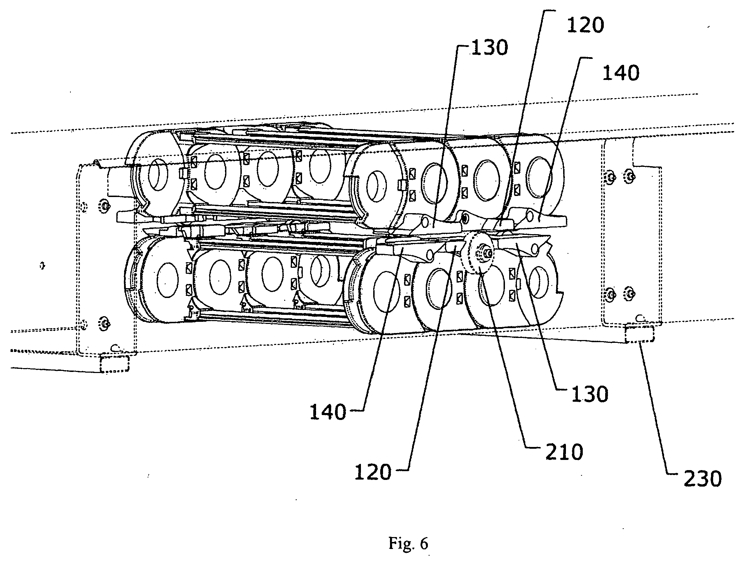

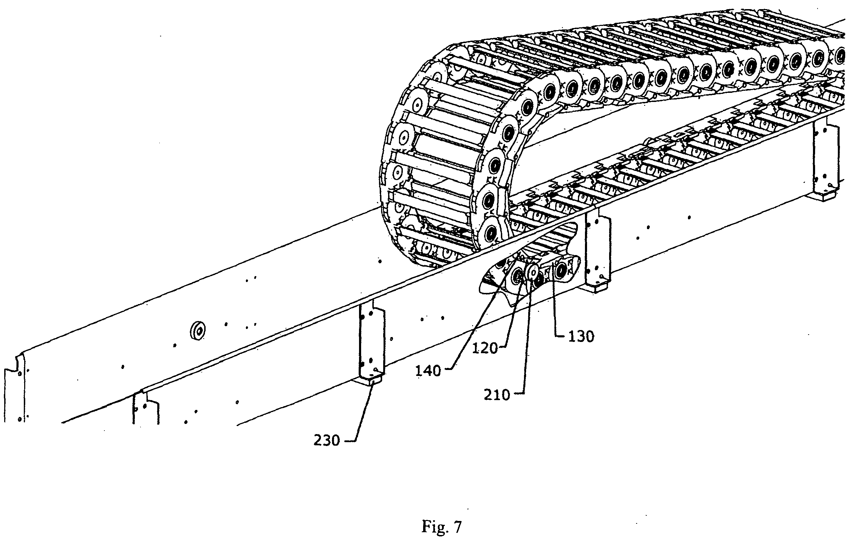

Fig. 6 is a perspective view of a shown through length of the chain of Fig. 1; and Fig. 7 is a perspective view like Fig. 1, with some shown through parts.

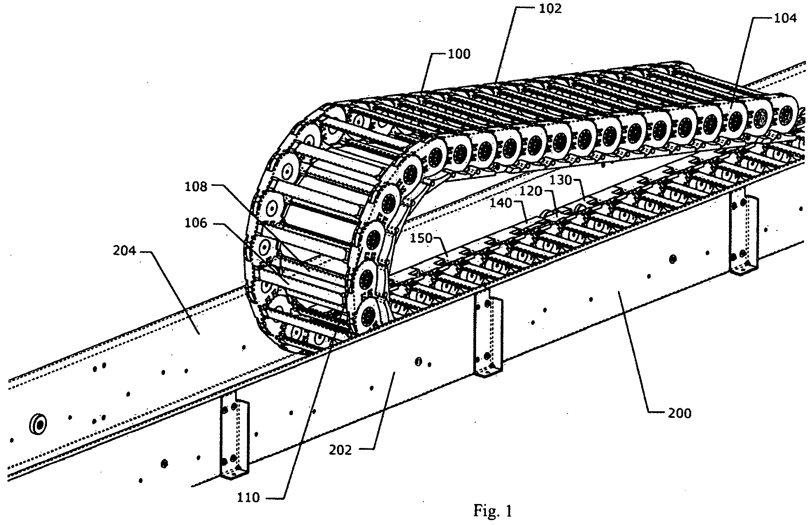

With reference now to Fig. 1, the energy chain 100 comprises a pair of righthand line 102 and left-hand line 104 of links 110, each hinged to the preceding and subsequent link of its line 102 or 104 in such a way that a rotation is allowed between a first aligned position and a second most rotated relative position. These final angular positions of links 110 are defined by detents or stops provided inside the links, which are well known in this technology, so that they will be neither described nor shown in detail. Each link of a line 102 or 104 is connected with the corresponding parallel line 104 or 1'2, respectively, through lower 106 and upper 108 cross members, respectively. In this way parallel links and cross members define inside the chain the sectional area for passage of the cables (not shown).

On the basis of the above illustrated configuration, the energy chain 100 can be bent, thus defining a fixed rectilinear portion, a curvilinear section and a second rectilinear mobile portion, that in the prior art chains slides on the fixed portion. The radius of curvature of the curvilinear section is clearly defined by the range of relative rotation between two consecutive chain links, through the above said detents or stops. With reference to the three identified chain portions, each link has a runner 120, 130, 140 or 150 which is fixed on the link side facing the bending center of the curvilinear section.

Before discussing the various runner configurations and their position on the energy chain 100, one must refer to the chain guide channel 200 which is provided with support rollers 210. Said channel 200 consists of a pair of side walls 202 and 204 and one or more base elements 230, such as bars or grooved profiles, to which said side walls are fixed, preferably in an adjustable way, so as to adjust the channel width to the cross-sectional size of chain 100. More particularly a set of rollers 210 supporting said chain runners, are fixed on said side walls at a distance that will be better defined hereinafter. Therefore the adjustment of the width of channel 200 to the chain size must take into account the actual width, namely including the protrusion of the runner surface relative to the links, as protrusions 122, 132, 142, 152 clearly allow the runners to lie on the rollers 210 of the guide channel 200.

The just described structure of the guide channel affects the configurations that may be adopted for the chain runners. The fixed chain portion is lodged inside the channel, so that the runners 120 mounted on links positioned in front of the rollers of the guide channel, must have a suitably shaped surface, namely with the protrusion 122 partially removed, so as to avoid any interference with said roller 210. Therefore a first variation of the chain runner is constituted by a runner 120 having a recess allowing the positioning of the link in proximity of the channel roller 210, which in this disclosure may be defined as guide channel runner 120 as distinction with the other variations.

Next to each guide channel runner 120, two more variations of the runner are fixed to corresponding adjacent chain links: a first variation 130 at the preceding position and a second variation 140 at the subsequent position, clearly relative to the position of the guide channel runner 120, or in other words at the farther position in respect of the curvilinear section and at the closer position in respect of the curvilinear section, respectively. The first variation is constituted by a runner 130 referred to as roller runner in this disclosure, where a roller 134 is fixed to the runner so as to protrude from the support surface 136; more particularly said roller 134 is fixed to the side opposite to the protrusion 132 of the same runner. The second variation is constituted by a runner 140 referred to as compensation roller and is provided with a projection 144 of the support surface 146 of the runner, dimensioned to compensate the distance between the runner surface 146 and the roller 134 of the roller runner 130.

From the foregoing description, the constructional and assembling logic of the chain and of the entire chain system, starts from the definition of the position of the rollers 210 on the side walls of the guide channel. This choice automatically determines which will be the links on which the channel runners 120 are mounted, namely those links that in the position of chain laid inside the channel, are lying in correspondence of the rollers 210. Once defined the position of the chain runners, preferably also as a function of the chain bending direction, on the links directly upstream and downstream this position, a roller runner 130 and a compensation runner 140 are positioned, respectively. By exclusion, all the other links will be provided with a simple runner 150, namely provided with a flat support surface 156 (thereby meaning without protrusions and/or recesses) and an integral protrusion 152 (thereby meaning without recesses). The described constructional and assembling logic clearly remain as a function of the arrangement of the rollers 210 inside the channel: more particularly they may be arranged, on the same side or literal wall 202, 204, at a mutual distance which may be a multiple of the chain pitch, constant or variable according to a preferred numerical series (for instance the series of prime numbers). Moreover the arrangement of rollers 210 may be chosen in a non-symmetrical way between the chain side walls 202, 204 so as to allot in a more uniform way the support of the chain upper portion on the lower portion during the operation. At last it is possible to adopt a variation of the assembly logic, in which the roller runners and the compensation runners on the two chain lines 102, 104 have an inverted position relative to the channel runner 210, namely for instance, if on line 102 the roller runner 130 is upstream the channel runner, on line 104 the roller runner 130 will be mounted downstream the channel runner. Therefore it should be apparent that from the described preferred embodiment, it is possible to achieve many alternative variations and embodiments, that may better respond to the particular applications, chain size, chain length, required load and speed and any other special constructional and operative parameters.

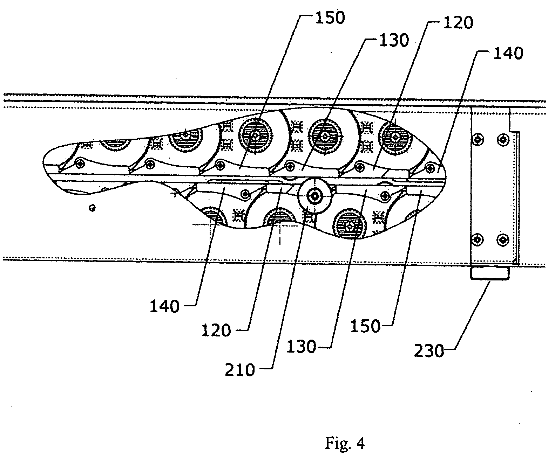

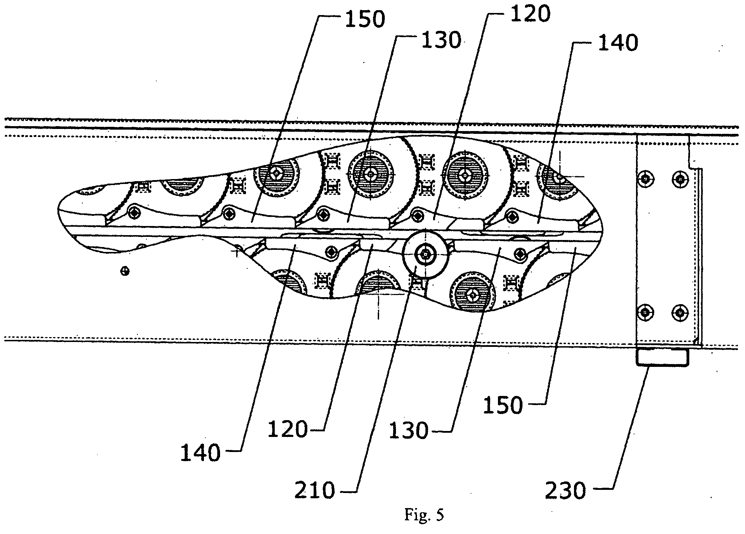

With specific reference to Figures 4 and 5, the function of the various kinds of runners is highlighted; in absence of these variations, adopting only the channel runner 120, in the moment of overlapping of two channel runners, the one in the lower portion and the other in the upper portion of the chain, there would be a temporary lack of support of the upper portion. To avoid such occurrence, the roller runner of the chain upper portion is positioned in correspondence with the compensation runner of the chain lower portion, namely the roller 134 lies and rolls on the protrusion 144. Obviously and as shown in Fig. 5, the same occurs for the roller runner of the lower portion and the compensation runner of the upper portion. Therefore this configuration allows to have a constant support of the chain, in every operative position, moreover avoiding grazing between runners, with possible wear, noise and generally irregular operation of the chain.

From the foregoing detailed description of the energy chain system of the present invention it is possible to note that it allows to fully achieve the above mentioned objects and targets, through general principles and different embodiments alternative to the described preferred embodiments. Such embodiments may involve variations and modifications to the geometric structure of the various elements, such as the choice of the protrusions or the rolling elements, their dimensions and assembling configurations, all these variations and modifications falling however within the scope of protection of the present invention, as defined in the appended claims.

## Claims

1. An energy chain system comprising an energy chain (100) in which links (110) being parallel and on opposite sides (102, 104) of the chain are connected by crossing members (106, 108), links being adjacent and on the same side of the chain are rotatably connected by pivot joints, the links being provided with runners having support surfaces (126, 136, 146, 156), and a guide channel (200) housing between sidewalls (202, 204) thereof, a chain portion lying on a plane of said channel, said sidewalls being further provided with rollers (210) on which said support surfaces slide, **characterized by** the fact that the runner (120) of each link within the laid chain portion coinciding with said rollers (210) has a recess and links adjacent to said link provided with said recess have, in turn, a runner (130) provided with a roller (134) and a runner (140) provided with a protrusion (144), said runners with said rollers and said runners with said protrusion on overlapping chain portion being arranged to mutually cooperate.

2. The energy chain system according to claim 1, wherein said rollers (210) are mounted on said sidewalls (202, 204) such that the sum of the roller radius and the height of its rotation axis, in respect of said support plane, is greater than the height of the runner surface, in respect of said support plane, of laid chain portion.

3. The energy chain system according to one or more preceding claims, wherein said rollers (210) are mounted on said sidewalls (202, 204) such that their rotation axes are separate by a multiple of the chain pitch.

4. The energy chain system according to one or more preceding claims, in which the multiple of the chain pitch increases, between a pair of roller axes and the subsequent one, according to a prime number series.

5. The energy chain system according to one or more preceding claims, in which runners (120) provided with recess are mounted on the links parallel and on opposite sides (102, 104) of the chain, runners (130) with roller (134) and runner (140) with protrusion (144) even being mounted parallel to runners with roller and runner with protrusion in the opposite side of the chain.

6. The energy chain system according to one or more preceding claims, in which runners (120) provided with recess are mounted on links parallel and on opposite sides (102, 104) of the chain, the runners (130) with roller (134) and runners (140) with protrusion (144) being mounted in a parallel manner with respect to runners with protrusion and runners with roller on the opposite side of the chain.

7. The energy chain system according to one or more preceding claims, in which runners (120) provided with recess are mounted on links not parallel and on opposite sides (102, 104) of the chain, the corresponding runners with roller and runners with protrusion being mounted in parallel or antiparallel manner according to claim 4 or 5, respectively.

## Patentansprüche

1. Energiekettensystem enthaltend:
- i) eine Schleppkette (100), worin auf gegenüberliegenden Kettenseiten (102, 104) angeordnete parallele Kettenglieder (110) durch Traversen (106, 108) verbunden werden, und auf derselben Kettenseite angeordnete anliegende Kettenglieder durch rotoidale Kupplungen verbunden werden, indem die Kettenglieder mit Standflächen (126, 136, 146, 150) aufweisenden Gleitschuhen versehen sind, und
- ii) eine Führungsschiene (200), um eine auf einer Schienenfläche anliegenden Kettenstrecke zwischen ihren Seitenwänden (202, 204) aufzunehmen, indem diese Seitenwände mit Rollen (210) für die Gleitung der besagten Standflächen versehen sind,
- **dadurch gekennzeichnet, dass** der Gleitschuh (120) jedes Kettengliedes an der sich mit diesen Rollen (210) zusammenfallenden erstreckenden Kettenstrecke eine Aussparung hat, und die an diesem mit solcher Aussparung versehenen Kettenglied anliegenden Kettenglieder ihrerseits einen mit einer Rolle (134) versehenen Gleitschuh (130) bzw. einen mit einem Vorsprung (144) versehenen Gleitschuh (140) aufweisen, indem die mit Rollen versehenen Gleitschuhe und die mit Vorsprüngen versehenen Gleitschuhe von überlappenden Kettenstrecken für eine gegenseitige Mitwirkung geignet sind.

2. Kettensystem nach Anspruch 1, worin die Rollen (210) auf den Seitenwänden (202, 204) so montiert werden, dass die Summe des Rollenhalbmessers und der Höhe ihrer Drehachse bezüglich der Standfläche höher als die Höhe der Standfläche des Gleitschuhes bezüglich der Schienenfläche in der anliegenden Kettenstrecke ist.

3. Kettensystem nach einem bzw. mehreren vorherigen Ansprüchen, worin die Rollen (210) auf den Seitenwänden (202, 204) so montiert werden, dass der Abstand zwischen ihren Drehachsen ein Vielfaches der Kettenteilung ist.

4. Kettensystem nach einem bzw. mehreren vorherigen Ansprüchen, worin das besagte Vielfaches der Kettenteilung zwischen einem Paar Drehachsen und dem folgenden Paar nach einer Primzahlreihe zunimmt.

5. Kettensystem nach einem bzw. mehreren vorherigen Ansprüchen, worin die mit Aussparung versehenen Gleitschuhe (120) auf parallele, auf gegenüberliegenden Kettenseiten (102, 104) angeordnete Kettenglieder montiert werden, und die mit Rollen (134) versehenen Gleitschuhe (130) sowie die mit Vorsprung (144) versehenen Gleitschuhe (140) parallel zu den Gleitschuhen mit Rollen bzw. den Gleitschuhen mit Vorsprung der gegenüberliegenden Kettenseite montiert werden.

6. Kettensystem nach einem bzw. mehreren vorherigen Ansprüchen, worin die mit Aussparung versehenen Gleitschuhe (120) auf parallele, auf gegenüberliegenden Kettenseiten (102, 104) angeordnete Kettenglieder montiert werden, und die mit Rollen (134) versehenen Gleitschuhe (130) sowie die mit Vorsprung (144) versehenen Gleitschuhe (140) parallel zu den Gleitschuhen mit Vorsprung bzw. den Gleitschuhen mit Rollen der gegenüberliegenden Kettenseite montiert werden.

7. Kettensystem nach einem bzw. mehreren vorherigen Ansprüchen, worin die mit Aussparung versehenen Gleitschuhe (120) auf nicht parallele, auf gegenüberliegenden Kettenseiten (102, 104) angeordnete Kettenglieder montiert werden, und die entsprechenden mit Rollen versehenen Gleichschuhe sowie die mit Vorsprung versehenen Gleitschuhe in paralleler bzw. antiparalleler Weise gemäß den Ansprüchen 4 bzw. 5 montiert werden.

## Revendications

1. Système de chaîne énergétique comprenant:
- i) une chaîne porte-câbles (100) dont les maillons (110) parallèles disposés sur côtés opposés (102, 104), sont connectés par des traverses (106, 108), et les maillons adjacents disposés sur le même côté de la chaine, sont raccordés de manière rotative par des joints rotoïdes, les maillons comportant des galets ayant des surfaces de support (126, 136, 146, 156), et
- ii) un profilé de guidage (200) pour recevoir entre ses parois latérales (202, 204) une partie de chaîne posée sur une surface du dit profilé, dont les parois latérales susdites sont munies de rouleaux (210) pour l'écoulement des dites surfaces de support,
- **caractérisé en ce que** le galet (120) de chaque maillon, dans la partie posée de la chaîne coïncidente avec les dits rouleaux (210), comporte un évidement alors que les maillons adjacents comportent à leur tour un galet (130) ayant un rouleau (134) et un galet (140) ayant un bourrelet (144), dont les galets avec rouleaux et les galets avec bourrelets des parties superposées de la chaîne sont aptes à coopérer réciproquement.

2. Système de chaîne énergétique selon la revendication 1, dont les dits rouleaux (210) sont montés sur les dites parois latérales (202, 204) de manière que la somme du rayon du rouleau et de la hauteur de son axe de rotation par rapport à la surface de support, est plus grande que la hauteur de la surface d'appui du rouleau par rapport à la surface de support, dans la partie de chaîne posée.

3. Système selon une ou plusieurs revendications précédentes, dont les dits rouleaux (210) sont montés sur les dites parois latérales (202, 204) de manière que leur axes de rotation ont une distance entre eux qui est un multiple du pas de la chaîne.

4. Système selon une ou plusieurs revendications précédentes, dont le dit multiple du pas de la chaîne entre une paire des axes des rouleaux et la paire successive, augmente selon une série de nombres premiers.

5. Système selon une ou plusieurs revendications précédentes, dont les galets (120) munis d'évidement sont montés sur des maillons parallèles disposés sur côtés opposés (102, 104) de la chaîne, les galets (130) avec rouleaux (134) et les galets (140) avec évidement (144) étant montés de manière parallèle aux galets à rouleaux et aux galets à évidement sur le côté opposé de la chaîne.

6. Système selon une ou plusieurs revendications précédentes, dont les galets (120) munis d'évidement sont montés sur des maillons parallèles disposés sur côtés opposés (102, 104) de la chaîne, les galets (130) avec rouleaux (134) et les galets (140) avec évidement (144) étant montés de manière parallèle aux galets à évidement et aux galets à rouleaux sur le côté opposé de la chaîne.

7. Système selon une ou plusieurs revendications précédentes, dont les galets (120) avec évidement sont montés sur des maillons non parallèles et sur côtés opposés (102, 104) de la chaîne, les galets à rouleaux et les galets à évidement correspondants étant montés respectivement de manière parallèle ou antiparallèle selon les revendications 4 ou 5.
